(19) **Europäisches Patentamt**
**European Patent Office**
**Office européen des brevets**

(11) **EP 3 156 169 A1**

(12) **EUROPEAN PATENT APPLICATION**
published in accordance with Art. 153(4) EPC

(43) Date of publication:
**19.04.2017 Bulletin 2017/16**

(51) Int Cl.:
***B23K 35/30*** *(2006.01)*   ***C22C 38/00*** *(2006.01)*
***C22C 38/48*** *(2006.01)*

(21) Application number: **15806001.2**

(22) Date of filing: **10.06.2015**

(86) International application number:
**PCT/JP2015/066777**

(87) International publication number:
**WO 2015/190534 (17.12.2015 Gazette 2015/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **11.06.2014 JP 2014120765**

(71) Applicant: **Kabushiki Kaisha Kobe Seiko Sho
(Kobe Steel, Ltd.)
Kobe-shi, Hyogo 651-8585 (JP)**

(72) Inventors:
• **MIYAMURA, Takeo**
  **Kobe-shi**
  **Hyogo 651-2271 (JP)**
• **NAMBA, Shigenobu**
  **Kobe-shi**
  **Hyogo 651-2271 (JP)**
• **IKEDA, Tetsunao**
  **Kanagawa 251-8551 (JP)**
• **ISHIDA, Masatoshi**
  **Kanagawa 251-8551 (JP)**

(74) Representative: **Müller-Boré & Partner
Patentanwälte PartG mbB
Friedenheimer Brücke 21
80639 München (DE)**

(54) **BUILDUP WELDED METAL AND MACHINE STRUCTURE**

(57)   A buildup welded metal having a composition which contains, in mass%, 9-11% of Ni, 18-21 % of Cr, 0.1-1% of Nb, 0.05-1% of Si, 0.08% or less of C, and 0.9% or less of Mn with the balance made up of Fe and inevitable impurities, and which satisfies formula (A). Among the inevitable impurities, P is controlled to 0.04% or less, S is controlled to 0.03% or less, Cu is controlled to 0.75% or less, V is controlled to 0.15% or less and N is controlled to 0.08% or less. In formula (A), the atomic symbols in parentheses represent the contents (mass%) of the respective elements:

$$[Cr]+1.5\times[Si]+0.5\times[Nb]+2.5\times[Mn]-0.2\times[Ni]+30\times[C] \leq 21.5 \ldots(A).$$

**EP 3 156 169 A1**

**Description**

Technical Field

The present invention relates to an overlay weld metal and a machine structure equipped with the overlay weld metal. More particularly, the present invention relates to an overlay weld metal formed by overlay welding using a welding material, such as, for example, a strip electrode, and to a machine structure.

Background Art

In the fields of petroleum refining and chemical plants, pressure vessels made of a Cr-Mo steel or a ferritic stainless steel are used. Although the Cr-Mo steels and ferritic stainless steels have high-temperature characteristics which enable these steels to withstand high-temperature environments, the corrosion resistance thereof is insufficient. Because of this, the inner surfaces of pressure vessels produced using these materials are generally subjected to overlay welding for the purpose of insuring corrosion resistance.
For such purpose, austenitic stainless steels containing Cr and Ni in high concentrations and having excellent corrosion resistance are used as the overlay weld metals. However, the stainless steels containing Cr in a high concentration have a problem in that a brittle phase ($\sigma$-phase) constituted of Fe and Cr is prone to be formed by the influence of heat and a heat treatment performed after the welding embrittles the weld metal ($\sigma$-embrittlement).
In a case where the overlay weld metal has embrittled, there is a possibility that during the period when the appliance is in use in a high-temperature environment, cracking might occur due to the influence of thermal stress. Consequently, inhibition of the embrittlement of overlay weld metals has become an important subject for ensuring the stable operation and long-term reliability of pressure vessels. In addition, since there recently is a tendency that post weld heat treatments are performed at higher temperatures in order to improve the heat resistance of the pressure vessels, the embrittlement of overlay weld metals is thought to be actualized in pressure vessels of the high-temperature high-pressure type.
A high-chromium-content two-phase stainless-steel welding material constituted of an austenite phase and a ferrite phase and containing no $\sigma$-phase has hitherto been proposed for the purpose of improving corrosion resistance, the welding material being a steel strip having a thickness of 1 mm or less obtained by rapidly cooling and solidifying a molten steel (see Patent Document 1). However, the technique described in Patent Document 1 is intended to inhibit welding materials from suffering $\sigma$-embrittlement due to hot working during the production, and is not a technique for inhibiting a weld metal from suffering $\sigma$-embrittlement through the welding or through a post weld heat treatment.
In general, austenitic stainless steels, when a ferrite phase is present therein, are prone to undergo a local increase in Cr concentration to form a $\sigma$-phase. An effective method for inhibiting the $\sigma$-phase formation is to stabilize the austenite phase, i.e., to reduce the amount of a ferrite phase to be formed, by, for example, lowering the concentration of Cr or increasing the concentration of Ni. Also effective for stabilizing the austenite phase is to reduce the Si content or to increase the C content.
Hitherto, a technique for avoiding $\sigma$-embrittlement in a stainless-steel material by reducing the ferrite content therein has hence been proposed (see Patent Document 2). In the austenitic stainless steel for heat resistance applications which is described in Patent Document 2, an improvement in unsusceptibility to $\sigma$-embrittlement is attained by regulating Cr+1.5Si+0.5Nb-{Ni+0.5Mn+30(C+N)} to a value in a specific range.

Prior Art Documents

Patent Documents

Patent Document 1: JP-A-H03-114693
Patent Document 2: JP-A-H08-239737

Summary of the Invention

Problems that the Invention is to Solve

However, the technique described in Patent Document 2 has the following drawback. In weld metals, it is necessary, from the standpoint of preventing hot cracks (solidification cracks), that the solidified austenite phase should contain a ferrite phase formed therein in a certain amount. Because of this, it is difficult to apply the increase in the content of austenite-stabilizing elements or the reduction in the content of ferrite-forming elements, such as that described in Patent Document 2, to the inhibition of the σ-embrittlement of weld metals.

According to conventional techniques, it is thought that for diminishing the σ-phase in an overlay weld metal, it is effective to reduce the content of Cr, which is a σ-phase constituent element, or of Si, which is an element that accelerates σ-phase formation. However, there is a possibility that reductions in the contents of these elements might result in a deterioration in the corrosion resistance of the weld metal.

Accordingly, a main object of the present invention is to provide an overlay weld metal which has excellent unsusceptibility to embrittlement while retaining intact corrosion resistance and which, even when exposed to a high-temperature environment over a prolonged period, is less apt to suffer cracking or separation. Another main object is to provide a machine structure.

Means for Solving the Problems

The overlay weld metal according to the present invention includes:

Ni: 9 to 11 mass%;
Cr: 18 to 21 mass%;
Nb: 0.1 to 1 mass%;
Si: 0.05 to 1 mass%;
C: 0.08 mass% or less (exclusive of 0 mass%); and
Mn: 0.9 mass% or less (exclusive of 0 mass%),

with the remainder being Fe and inevitable impurities, and
contents of elements P, S, Cu, V, and N, among the inevitable impurities, are regulated to:

P: 0.04 mass% or less;
S: 0.03 mass% or less;
Cu: 0.75 mass% or less;
V: 0.15 mass% or less; and
N: 0.08 mass% or less, and

the overlay weld metal satisfies the following mathematical expression 1, where [Cr] is the content of Cr (mass%), [Si] is the content of Si (mass%), [Nb] is the content of Nb (mass%), [Mn] is the content of Mn (mass%), [Ni] is the content of Ni (mass%), and [C] is the content of C (mass%).

[Math. 1]

$$[Cr]+1.5\times[Si]+0.5\times[Nb]+2.5\times[Mn]-0.2\times[Ni]+30\times[C] \leq 21.5$$

The overlay weld metal according to the present invention may further include Mo in an amount of 0.75 mass% or less, and in this case, the following mathematical expression 2 is satisfied, where [Mo] is the content of Mo (mass%).

[Math. 2]

$$[Cr]+[Mo]+1.5\times[Si]+0.5\times[Nb]+2.5\times[Mn]-0.2\times[Ni]+30\times[C] \leq 21.5$$

The machine structure according to the present invention includes the above-described overlay weld metal.

Effects of the Invention

According to the present invention, the embrittlement which may occur through a post weld heat treatment can be inhibited while ensuring a Cr content necessary for corrosion resistance. Consequently, the overlay weld metal, even when exposed to a high-temperature environment over a prolonged period, can be made less apt to crack or suffer separation due to cracking.

Modes for Carrying Out the Invention

Modes for carrying out the present invention are explained below in detail. The present invention should not be construed as being limited to the embodiments explained below.

The present inventor diligently made investigations on overlay weld metals formed by welding with strip electrodes constituted of stainless steels, for the purpose of improving high-temperature corrosion resistance. As a result, the inventor has discovered that, in a case where weld metals are formed so as to be constituted of components in a certain range, the embrittlement of the weld metals strongly depends on the concentration of Mn and a reduction in Mn content leads to inhibition of σ-phase formation.

With respect of Cr and Si also, a reduction in the content thereof tends to inhibit the σ-embrittlement. However, a reduction in Cr content or Si content results in a decrease in ferrite phase amount and there is hence a possibility that welding cracks might be prone to occur. In contrast, Mn is an element which stabilizes austenite and, hence, a reduction in Mn content makes it possible to increase or maintain the amount of a ferrite phase while inhibiting σ-embrittlement. Thus, the present inventor has discovered that the formation of a σ-phase in a weld metal can be inhibited by a method different from the conventional knowledge based on a reduction in Si content or Cr content.

Namely, the overlay weld metal of this embodiment has a composition which contains 9 to 11 mass% ofNi, 18 to 21 mass% of Cr, 0.1 to 1 mass% of Nb, and 0.05 to 1 mass% of Si, and has a C content regulated to 0.08 mass% or less, an Mn content regulated to 0.9 mass% or less, a P content regulated to 0.04 mass% or less, an S content regulated to 0.03 mass% or less, a Cu content regulated to 0.75 mass% or less, a V content regulated to 0.15 mass% or less, and an N content regulated to 0.08 mass% or less, with the remainder being Fe and inevitable impurities, and which satisfies the following mathematical expression 3. By configuring an overlay weld metal so as to have such composition, the weld metal can be inhibited from embrittling through a post weld heat treatment. In other words, a weld metal which has satisfactory toughness even after a post weld heat treatment is obtained.

[Math. 3]

$$[Cr]+1.5\times[Si]+0.5\times[Nb]+2.5\times[Mn]-0.2\times[Ni]+30\times[C] \leq 21.5$$

In the mathematical expression 3, [Cr] is the content of Cr (mass%), [Si] is the content of Si (mass%), [Nb] is the content ofNb (mass%), [Mn] is the content of Mn (mass%), [Ni] is the content of Ni (mass%), and [C] is the content of C (mass%).

Next, reasons for the numerical limitations on the components contained in the overlay weld metal of this embodiment are explained.

[Ni: 9 to 11 mass%]

Ni is an element which has the function of stabilizing the austenite phase. In a case where the Ni content is less than 9 mass%, the austenite phase cannot be maintained. Meanwhile, in a case where the Ni content is too high and exceeds 11 mass%, this leads to an increase in cost. Consequently, the Ni content is 9 to 11 mass%. From the standpoint of stabilization of the austenite phase, the Ni content is preferably 9.5 mass% or higher, more preferably 10 mass% or higher. From the standpoint of cost reduction, it is desirable that the addition amount of Ni should be as small as possible. Specifically, the Ni content is preferably 10.7 mass% or less, more preferably 10.5 mass% or less.

[Cr: 18 to 21 mass%]

Cr is an element which is essential for imparting the basic properties required of overlay weld metals, and in particular, is an essential component for enabling the overlay weld metal to show excellent corrosion resistance. However, in a case where the Cr content is less than 18 mass%, the corrosion resistance required of the overlay weld metal is not obtained. Meanwhile, in a case where the Cr content is too high and exceeds 21 mass%, the overlay weld metal has reduced unsusceptibility to embrittlement. Consequently, the Cr content is 18 to 21 mass%. From the standpoint of improving the corrosion resistance, the Cr content is preferably 18.5 mass% or higher, more preferably 19 mass% or higher. From the standpoint of improving the unsusceptibility to embrittlement, the Cr content is preferably 20.5 mass% or less, more preferably 20 mass% or less.

[Nb: 0.1 to 1 mass%]

Nb fixes the carbon contained in the steel and thereby inhibits the formation of Cr-deficient layers. Nb has the function of thereby enhancing the contribution of the Cr to corrosion resistance. However, in a case where the content of Nb is less than 0.1 mass%, these effects are not obtained. Meanwhile, too high Nb contents lead to embrittlement of the weld metal. Consequently, Nb content is 1 mass% or less.

From the standpoint of improving the corrosion resistance, the Nb content is 0.3 mass% or higher. From the standpoint of ensuring an amount sufficient for fixation of C, it is more preferable that the Nb content should be at least 8 times the C content. From the standpoint of improving the unsusceptibility to embrittlement, the Nb content is preferably 0.9 mass% or less, more preferably 0.8 mass% or less.

[Si: 0.05 to 1 mass%]

Si brings about the function of deoxidizing and has the effect of improving the melt flowability. Furthermore, Si is also an element which improves the acid resistance and corrosion resistance. However, in a case where the Si content is less than 0.05 mass%, these effects are not sufficiently obtained. Meanwhile, Si further has the function of embrittling the weld metal, and too high contents thereof result in a decrease in unsusceptibility to embrittlement, thereby lessening the effects of the present invention. Consequently, the Si content is regulated to 1 mass% or less.

From the standpoints of improving deoxidizing function, etc., the Si content is preferably 0.1 mass% or higher, more preferably 0.15 mass% or higher. Meanwhile, from the standpoint of improving the unsusceptibility to embrittlement, the Si content is preferably 0.8 mass% or less, more preferably 0.6 mass% or less.

[C: 0.08 mass% or less (exclusive of 0 mass%)]

C fixes Cr, which has the function of improving corrosion resistance, as carbides and undesirably forms Cr-deficient layers around the carbides, the Cr-deficient layers serving as starting points for corrosion. Consequently, in the overlay weld metal of this embodiment, the C content is regulated to 0.08 mass% or less in order to maintain satisfactory corrosion resistance. From the standpoint of improving the corrosion resistance, the C content is preferably 0.06 mass% or less, more preferably 0.04 mass% or less. Meanwhile, it is preferable that the C content should be 0.01 mass% or higher.

[Mn: 0.9 mass% or less (exclusive of 0 mass%)]

Mn is a most important element for obtaining the effects of the present invention. By minimizing the Mn content so long as the Cr content and the Ni content satisfy the mathematical expression 2, the embrittlement of the weld metal can be mitigated. Specifically, in a case where the Mn content exceeds 0.9 mass%, the effect of mitigating the embrittlement of the weld metal is not sufficiently obtained.

From the standpoint of improving the unsusceptibility to embrittlement, the Mn content is preferably 0.8 mass% or less, more preferably 0.7 mass% or less. Meanwhile, excessively reducing the Mn content in the weld metal results in an increase in production cost. Consequently, it is preferable, from the standpoint of cost-effectiveness, that the Mn content should be 0.2 mass% or higher.

[Cu: 0.75 mass% or less]

Although Cu is an inevitable impurity, excessively high contents thereof undesirably make the weld metal undergo precipitation strengthening and harden thereby. Consequently, the Cu content is regulated to 0.75 mass% or less. From the standpoint of inhibiting the precipitation strengthening, the Cu content is preferably 0.50 mass% or less, more preferably 0.20 mass% or less, even more preferably 0.05 mass% or less. The weld metal may contain completely no Cu (that is, 0 mass%). However, since Cu would be unavoidably incorporated into the weld metal, reducing the content thereof to an extremely low level results in an increase in production cost. Consequently, as the lower limit thereof, the Cu content is above 0 mass% from the standpoint of cost-effectiveness. A more preferred lower limit thereof is 0.01 mass%.

[S: 0.03 mass% or less]

S also is an inevitable impurity. In a case where the content thereof increases, the weld metal becomes brittle considerably. Consequently, the S content is regulated to 0.03 mass% or less. From the standpoint of improving the unsusceptibility to embrittlement, the S content is preferably 0.02 mass% or less, more preferably 0.015 mass% or less. The weld metal may contain completely no S (that is, 0 mass%). However, since S would be unavoidably incorporated into the weld metal, reducing the content thereof to an extremely low level results in an increase in production cost. Consequently, as the lower limit thereof, the S content is above 0 mass% from the standpoint of cost-effectiveness. A more preferred lower limit thereof is 0.003 mass%.

[P: 0.04 mass% or less]

P also is an inevitable impurity. In a case where the content thereof increases, welding cracks become prone to occur. Consequently, the P content is regulated to 0.040 mass% or less. From the standpoint of improving the welding crack resistance, the P content is preferably 0.030 mass% or less, more preferably 0.020 mass% or less. The weld metal may contain completely no P (that is, 0 mass%). However, since P would be unavoidably incorporated into the weld metal, reducing the content thereof to an extremely low level results in an increase in production cost. Consequently, as the lower limit thereof, the P content is above 0 mass% from the standpoint of cost-effectiveness. A more preferred lower limit thereof is 0.005 mass%.

[V: 0.15 mass% or less]

V also is an inevitable impurity. In a case where the content thereof increases, the weld metal would have an excessively high ferrite content, resulting in a decrease in corrosion resistance. Consequently, the content of V is regulated to 0.15 mass% or less. From the standpoint of improving the corrosion resistance, the V content is preferably 0.10 mass% or less, more preferably 0.050 mass% or less. The weld metal may contain completely no V (that is, 0 mass%). However, since V would be unavoidably incorporated into the weld metal, reducing the content thereof to an extremely low level results in an increase in production cost. Consequently, as the lower limit thereof, the V content is above 0 mass% from the standpoint of cost-effectiveness. A more preferred lower limit thereof is 0.01 mass%.

[N: 0.08 mass% or less]

N also is an inevitable impurity. When the content thereof increases, there are cases where Cr-N compounds are formed to undesirably reduce the concentration of solute Cr, which performs the function of maintaining the corrosion resistance. Consequently, the N content is regulated to 0.08 mass% or less. From the standpoint of corrosion resistance, the N content is preferably 0.06 mass% or less, more preferably 0.05 mass% or less. The weld metal may contain completely no N (that is, 0 mass%). However, since N would be unavoidably incorporated into the weld metal, reducing the content thereof to an extremely low level results in an increase in production cost. Consequently, as the lower limit thereof, the N content is above 0 mass% from the standpoint of cost-effectiveness. A more preferred lower limit thereof is 0.005 mass%.

[Remainder]

Components other than those described above in the overlay weld metal of this embodiment, i.e., the remainder to the weld metal, are Fe and inevitable impurities. Besides Cu, S, P, and the other impurity elements described above, examples of the inevitable impurities include ones derived from the raw materials, flux, or welding atmosphere, such as Sn, Pb, Sb, As, Se, Zn, Ca, Al, Mg, Ti, Zr, Y, Ta, Hf, Sc, Co, and Ag. Even when these components are contained, this does not affect the effects of the present invention.

It is, however, noted that low-melting-point metals such as Sn, Pb, Sb, As, Se, and Zn induce welding cracks when contained in a large amount. It is hence desirable to regulate the concentration of these elements to a low value. Meanwhile, Al, Ti, Zr, Y, Ca, and Mg are elements which form coarse nitride inclusions or oxide inclusions to reduce the mechanical properties, and it is hence desirable to regulate the concentration thereof to a low value.

$$[Cr+1.5Si+0.5Nb+2.5Mn-0.2Ni+30C \leq 21.5]$$

Cr, Si, Nb, Mn, Ni, and C are elements that affect the embrittlement characteristics (toughness) of the overlay weld metal of this embodiment which has undergone a heat treatment, and the relationship shown by the mathematical expression 3 is a requirement necessary for effectively obtaining the effect of Mn diminution. In a case where the contents of these elements do not satisfy the mathematical expression 3, the effect of Mn diminution is not sufficiently obtained, making it impossible to obtain an overlay weld metal having excellent toughness through a post weld heat treatment performed at a higher temperature.

The overlay weld metal of this embodiment can contain Mo in an amount of 0.75 mass% or less, besides the components described above. In this case, the composition of the overlay weld metal must satisfy the following mathematical expression 4. In the following mathematical expression 4, [Mo] is the content of Mo (mass%).

[Math. 4]

$$[Cr]+[Mo]+1.5\times[Si]+0.5\times[Nb]+2.5\times[Mn]-0.2\times[Ni]+30\times[C] \leq 21.5$$

[Mo: 0.75 mass% or less (exclusive of 0 mass%)]

Mo performs the same function as Cr and is hence added according to need for the purpose of regulating the corrosion resistance. However, too high Mo contents reduce the unsusceptibility to embrittlement of the weld metal to such a degree that the effects of the present invention are considerably lessened. Consequently, in the case of adding Mo, the content thereof is regulated to 0.75 mass% or less. From the standpoint of improving the unsusceptibility to embrittlement, the Mo content is preferably 0.4 mass% or less, more preferably 0.3 mass% or less. Since reducing the content of Mo to an extremely low level results in an increase in production cost, it is preferable, from the standpoint of cost-effectiveness, that the Mo content should be 0.05 mass% or higher.

$$[Cr+Mo+1.5Si+0.5Nb+2.5Mn-0.2Ni+30C \leq 21.5]$$

Mo also is an element that affects the embrittlement characteristics (toughness) of the overlay weld metal of this embodiment which has undergone a heat treatment. Consequently, in the case where the overlay weld metal contains Mo, the composition must satisfy the relationship shown by the mathematical expression 4, which is the mathematical expression 3 to which Mo content has been added. The mathematical expression 4 is also the requirement necessary for effectively obtaining the effect of Mn diminution. In a case where the contents of these elements do not satisfy the mathematical expression 4, the effect of Mn diminution is not sufficiently obtained, making it impossible to obtain an overlay weld metal having excellent toughness through a post weld heat treatment performed at a higher temperature.

[Formation Method]

A method for forming the overlay weld metal of this embodiment is explained below. The overlay weld metal of this embodiment can be formed, for example, by SAW (submerged-arc welding) or ESW (electroslag welding) using a strip-electrode overlay welding material. However, usable methods are not limited to these, and any of various welding methods can be applied so long as the method yields a weld metal having the composition described above.

It is preferable that the strip-electrode overlay welding material to be used should have a width of 15 mm or larger, from the standpoint of efficiently performing the welding over a large area. From the standpoint of smoothly feeding the continuous welding material, it is preferable that the welding material to be used should have a thickness of 0.8 mm or less. Such a strip electrode can be produced, for example, by subjecting a steel slab obtained through melting to rolling and bright annealing. The strip electrode to be used may be any such strip in which the surfaces have not excessively oxidized and have a metallic luster.

The welding material to be used when forming the overlay weld metal of this embodiment can be one which has a composition corresponding to the components of the weld metal. However, there are cases where use of a welding material in which the concentrations of Cr and Nb, which are prone to be oxidized and consumed during the welding, have been heightened beforehand makes it easy to obtain the desired components. It is also possible to regulate the components of the weld metal by adding raw materials to the flux to be used during the welding.

The base metal to be welded by overlay welding with the method and material described above, that is, the base metal on which the overlay weld metal of this embodiment is to be formed, is not particularly limited. However, Cr-Mo steel materials and ferritic stainless-steel materials are suitable. By forming the overlay weld metal of this embodiment on surfaces of members constituted of any of these materials, a machine structure is rendered possible in which the overlay weld metal is less apt to crack or separate even after long-term use in a high-temperature environment. As a result, not only the high-temperature appliance can be stably operated, but also a cost reduction due to omissions of repair and maintenance is possible. Examples of the machine structure in which the overlay weld metal of this embodiment has been formed include pressure vessels for petroleum refining in which high-temperature corrosion is problematic.

As described above in detail, the overlay weld metal of this embodiment has features wherein the contents of Ni, Cr, Nb, Si, C, P, S, Cu, V, and N are in specific ranges and the Mn content has been regulated to 0.9 mass% or less and wherein (Cr+1.5Si+0.5Nb+2.5Mn-0.2Ni+30C) is 21.5 or less. Because of this, the embrittlement which occurs through a post weld heat treatment can be more inhibited than in conventional overlay weld metals, without necessitating an increase in the content of Cr, which is necessary for corrosion resistance, or a reduction in Si content or ferrite content, or an increase in the content of Ni, which is expensive.

Examples

The effects of the present invention are specifically explained below by reference to Examples according to the present invention and Comparative Examples. In the following Examples, strip electrodes differing in composition were used to conduct overlay welding, and the overlay weld metals obtained were evaluated for toughness.

<Method for forming Weld Metals>

The strip electrodes to be used were produced by forming 30-kg ingots, though melting and casting, which respectively corresponded to the chemical compositions of the overlay weld metals of the Examples and Comparative Examples, subjecting the ingots to hot forging, hot rolling, cold rolling, and bright annealing, and then slit. The strip electrodes each had a size of 75 mm (width) × 0.4 mm (thickness). These strip electrodes were each used to deposit one layer on a base metal constituted of 9Cr-1Mo-V steel, by ESW (electroslag welding) under the conditions of a current of 1,400 A and a welding speed of 18 cm/min. The resultant welds were subjected to a 32-hour post weld heat treatment at 750°C, thereby obtaining overlay weld metals.

<Evaluation Method>

Next, plates each having a length of 55 mm, width of 10 mm, and thickness of 2.5 mm were produced by machining from each of the weld metals of the Examples and Comparative Examples. In a surface with dimensions of 55 mm (length) × 2.5 mm, a U-shaped notch having a depth of 2 mm and a notch bottom radius of 1 mm was formed at the position corresponding to a length of 22.5 mm. Thus, Charpy impact test specimens as provided for in JIS Z 2242 were obtained.

These test specimens were subjected to a Charpy impact test under the temperature conditions of 0°C. The test specimens which, as a result, had a strength of 10 J or higher were regarded as acceptable.

In the following Table 1 are shown the compositions of the weld metals of the Examples and Comparative Examples and the results of the evaluation thereof. The components of each strip electrode used for the welding were substantially the same as the components of the corresponding weld metal shown in Table 1. In the composition of each weld metal shown in Table 1, the remainder was Fe and inevitable impurities. Although the table includes no mention of Cu, the Cu content in each example was 0.05 mass% or less. The weld metals Nos. 1 to 10 are Examples according to the present invention, while Nos. 11 to 20 are Comparative Examples.

[Table 1]

| | No. | Composition of weld metal (mass%) | | | | | | | | | | | Cr+Mo+1.5Si+ 0.5Nb+2.5Mn-0.2Ni+30C | Charpy impact value (J) |
|---|---|---|---|---|---|---|---|---|---|---|---|---|---|---|
| | | C | Si | Mn | P | S | Ni | Cr | Nb | V | Mo | N | | |
| Example | 1 | 0.019 | 0.67 | 0.54 | 0.018 | 0.006 | 10.9 | 20.1 | 0.37 | 0.079 | 0.13 | 0.027 | 21.2 | 22.5 |
| | 2 | 0.017 | 0.39 | 0.76 | 0.016 | 0.012 | 10.0 | 19.4 | 0.37 | 0.022 | 0.23 | 0.058 | 20.8 | 14.7 |
| | 3 | 0.028 | 0.46 | 0.53 | 0.008 | 0.011 | 10.4 | 19.8 | 0.46 | 0.030 | 0.14 | 0.042 | 20.9 | 16.0 |
| | 4 | 0.054 | 0.56 | 0.63 | 0.026 | 0.016 | 10.6 | 18.1 | 0.29 | 0.062 | 0.18 | 0.038 | 20.3 | 19.6 |
| | 5 | 0.026 | 0.46 | 0.51 | 0.006 | 0.011 | 9.7 | 18.7 | 0.26 | 0.026 | 0.12 | 0.043 | 19.8 | 25.0 |
| | 6 | 0.022 | 0.51 | 0.85 | 0.017 | 0.024 | 9.1 | 18.1 | 0.42 | 0.099 | 0.15 | 0.028 | 20.2 | 11.2 |
| | 7 | 0.032 | 0.32 | 0.41 | 0.009 | 0.014 | 10.0 | 20.4 | 0.54 | 0.059 | 0.21 | 0.063 | 21.3 | 16.3 |
| | 8 | 0.062 | 0.33 | 0.68 | 0.011 | 0.005 | 10.3 | 18.7 | 0.61 | 0.042 | 0.34 | 0.031 | 21.3 | 14.3 |
| | 9 | 0.042 | 0.35 | 0.67 | 0.031 | 0.013 | 10.8 | 19.3 | 0.56 | 0.103 | 0.11 | 0.041 | 21.0 | 13.4 |
| | 10 | 0.027 | 0.41 | 0.89 | 0.022 | 0.009 | 9.5 | 19.4 | 0.29 | 0.043 | 0.11 | 0.049 | 21.4 | 12.6 |
| Comparative Example | 11 | 0.035 | 0.78 | 1.05 | 0.011 | 0.013 | 10.9 | 19.4 | 0.63 | 0.060 | 0.16 | 0.032 | 22.5 | 7.4 |
| | 12 | 0.037 | 0.52 | 0.98 | 0.016 | 0.008 | 9.8 | 18.3 | 0.58 | 0.071 | 0.10 | 0.067 | 21.1 | 9.8 |
| | 13 | 0.023 | 0.55 | 1.17 | 0.021 | 0.006 | 10.9 | 18.7 | 0.38 | 0.076 | 0.19 | 0.033 | 21.3 | 8.8 |
| | 14 | 0.033 | 0.44 | 1.44 | 0.019 | 0.009 | 10.1 | 20.9 | 0.43 | 0.093 | 0.14 | 0.035 | 24.5 | 3.7 |
| | 15 | 0.031 | 0.47 | 1.43 | 0.019 | 0.010 | 10.2 | 20.2 | 0.45 | 0.094 | 0.12 | 0.034 | 23.7 | 6.0 |
| | 16 | 0.027 | 0.24 | 1.18 | 0.010 | 0.008 | 10.9 | 18.1 | 0.28 | 0.054 | 0.13 | 0.065 | 20.3 | 7.1 |
| | 17 | 0.019 | 0.51 | 0.67 | 0.029 | 0.011 | 10.1 | 20.4 | 0.33 | 0.064 | 0.46 | 0.046 | 22.0 | 8.0 |
| | 18 | 0.055 | 0.50 | 0.49 | 0.015 | 0.015 | 9.1 | 20.7 | 0.49 | 0.081 | 0.59 | 0.024 | 23.3 | 8.2 |
| | 19 | 0.021 | 0.29 | 0.89 | 0.014 | 0.006 | 10.4 | 20.9 | 0.32 | 0.104 | 0.35 | 0.029 | 22.6 | 7.7 |
| | 20 | 0.032 | 0.48 | 1.57 | 0.019 | 0.009 | 10.4 | 19.6 | 0.46 | 0.093 | 0.12 | 0.035 | 23.5 | 5.5 |

As shown in Table 1, the weld metals Nos. 1 to 10, which had compositions within the range according to the present invention, each had a Charpy impact value of 10 J or higher and showed excellent toughness. In contrast, the weld metals No. 11, No. 14, No. 15, and Nos. 17 to 20, which did not satisfy the mathematical expression 2, and the weld metals No. 12, No. 13, and No. 16, which satisfied the mathematical expression 2 but had Mn contents outside the range according to the present invention, each had a Charpy impact value less than 10 J and showed poor toughness.

It was ascertained from these results that according to the present invention, an overlay weld metal having high toughness and excellent unsusceptibility to embrittlement is obtained without the need of reducing the Cr content, which affects the corrosion resistance.

While the present invention has been described in detail and with reference to specific embodiments thereof, it will be apparent to one skilled in the art that various changes and modifications can be made therein without departing from the spirit and scope thereof.

This application is based on a Japanese patent application No. 2014-120765 filed on June 11, 2014, the contents of which are incorporated herein by reference.

Industrial Applicability

The overlay weld metal of the present invention is excellent in terms of corrosion resistance and unsusceptibility to embrittlement and is less apt to crack or separate even when exposed to a high-temperature environment over a prolonged period. This overlay weld metal hence is especially useful in machine structures such as pressure vessels for petroleum refining or chemical plants.

**Claims**

1. An overlay weld metal comprising:

   Ni: 9 to 11 mass%;
   Cr: 18 to 21 mass%;
   Nb: 0.1 to 1 mass%;
   Si: 0.05 to 1 mass%;
   C: 0.08 mass% or less (exclusive of 0 mass%); and
   Mn: 0.9 mass% or less (exclusive of 0 mass%),

   with the remainder being Fe and inevitable impurities,
   wherein contents of elements P, S, Cu, V, and N, among the inevitable impurities, are regulated to:

   P: 0.04 mass% or less;
   S: 0.03 mass% or less;
   Cu: 0.75 mass% or less;
   V: 0.15 mass% or less; and
   N: 0.08 mass% or less,

   the overlay weld metal satisfies the following mathematical expression (A), where [Cr] is the content of Cr (mass%), [Si] is the content of Si (mass%), [Nb] is the content of Nb (mass%), [Mn] is the content of Mn (mass%), [Ni] is the content of Ni (mass%), and [C] is the content of C (mass%).
   [Math. 1]

$$[Cr]+1.5\times[Si]+0.5\times[Nb]+2.5\times[Mn]-0.2\times[Ni]+30\times[C] \leq 21.5 \ldots(A)$$

2. The overlay weld metal according to claim 1, which further comprises Mo in an amount of 0.75 mass% or less (exclusive of 0 mass%) and satisfies the following mathematical expression (B), where [Mo] is the content of Mo (mass%). [Math. 2]

$$[Cr]+[Mo]+1.5\times[Si]+0.5\times[Nb]+2.5\times[Mn]-0.2\times[Ni]+30\times[C] \leq 21.5 \ldots(B)$$

**3.** A machine structure comprising the overlay weld metal according to claim 1 or 2.

## INTERNATIONAL SEARCH REPORT

| International application No. |
|---|
| PCT/JP2015/066777 |

### A. CLASSIFICATION OF SUBJECT MATTER
*B23K35/30(2006.01)i, C22C38/00(2006.01)i, C22C38/48(2006.01)i*

According to International Patent Classification (IPC) or to both national classification and IPC

### B. FIELDS SEARCHED

Minimum documentation searched (classification system followed by classification symbols)
B23K35/00-35/40, C22C38/00-38/60

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 64-10317 B2 (Kobe Steel, Ltd.), 21 February 1989 (21.02.1989), claims 1 to 2; page 4, left column, lines 19 to 21; page 4, right column, line 42 to page 5, right column, line 17; table 3, example no.3, 11, 37 (Family: none) | 1-3 |
| A | JP 60-121098 A (Kawasaki Steel Corp.), 28 June 1985 (28.06.1985), claims (Family: none) | 1-3 |
| A | JP 61-115674 A (Kawasaki Steel Corp.), 03 June 1986 (03.06.1986), claims (Family: none) | 1-3 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 August 2015 (18.08.15) | 25 August 2015 (25.08.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

## INTERNATIONAL SEARCH REPORT

| | International application No. |
|---|---|
| | PCT/JP2015/066777 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 62-68693 A  (Toshiba Corp.),<br>28 March 1987 (28.03.1987),<br>claims 1 to 9<br>(Family: none) | 1-3 |
| A | JP 62-64493 A  (Toshiba Corp.),<br>23 March 1987 (23.03.1987),<br>claims 1 to 12<br>(Family: none) | 1-3 |
| A | JP 58-199847 A  (Nippon Steel Corp.),<br>21 November 1983 (21.11.1983),<br>claims 1 to 4<br>(Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03114693 A
- JP H08239737 A
- JP 2014120765 A